# EUROPÄISCHE PATENTANMELDUNG

(11) **EP 4 737 748 A1**
(43) Veröffentlichungstag der Anmeldung: **06.05.2026**
(21) Anmeldenummer: 25224610.3
(22) Anmeldetag: 22.12.2020
(51) Int. Cl.: F16B 19/00, F16B 21/02, F16B 29/00, B60R 13/02, F16B 5/06, F16B 19/10

(54) **VERBINDUNGSELEMENT UND VERBINDUNGSANORDNUNG**

(30) Priorität: 10.01.2020 DE 102020200253; 25.03.2020 DE 102020203872; 19.05.2020 DE 102020113588
(62) Teilanmeldung aus: 20839041.9
(71) Anmelder: Brose Fahrzeugteile SE & Co. Kommanditgesellschaft, Bamberg, 96052 Bamberg (DE)
(72) Erfinder: HERZOG, Hans, 96129 Strullendorf (DE); HÜMMER, Norman, 96250 Ebensfeld (DE); JAHN, Michael, 96231 Bad Staffelstein (DE); RAUSCH, Uwe, 99897 Tambach-Dietharz (DE); SPINDLER, Daniel, 99894 Friedrichroda (DE); STOEBE, Manuel, 99894 Finsterbergen (DE); STOETZER, Jan, 99897 Tambach-Dietharz (DE)
(74) Vertreter: FDST Patentanwälte

(57) **Zusammenfassung**

Die Erfindung betrifft ein Verbindungselement (1) zur mechanischen Verbindung wenigstens zweier Bauteile (2, 3), aufweisend einen Verschlusskopf (4) zur Anlage an ein erstes Bauteil (2) und einen Verschlussfuß (5) zur Anlage an einem zweiten Bauteil (3) und zur Verspannung dieses gegen das erste Bauteil (2) in einer verdrehten Endmontageposition sowie einen Schaftabschnitt (6), der sich zwischen dem Verschlusskopf (4) und dem hierzu in Schaftlängsrichtung (L) axial beabstandeten Verschlussfuß (5) erstreckt, wobei der Verschlusskopf (4) eine sich in Schaftlängsrichtung (L) des Schaftabschnitts (6) erstreckende Dichtfläche (7) zur dichtenden Anlage an einer korrespondierenden Dichtfläche (18) einer Ausnehmung (19) des ersten Bauteils (2) aufweist. Sie betrifft weiter eine Verbindungsanordnung (28) umfassend ein erstes Bauteil (2) und wenigstens ein zweites Bauteil (3) sowie ein solches Verbindungselement (1), vorzugsweise aus einer Materialkomponente.

## Beschreibung

Die vorliegende Erfindung betrifft ein Verbindungselement zur mechanischen Verbindung wenigstens zweier Bauteile, insbesondere zweier Bauteile einer Kraftfahrzeugtür. Die Erfindung betrifft des Weiteren eine Verbindungs- oder Modulanordnung mit einem solchen Verbindungselement.

Ein derartiges Verbindungselement wird insbesondere zum mechanischen Verbinden zweier flächenförmigen Bauteile, beispielsweise eines Türinnenblechs oder Karosserieteils eines Kraftfahrzeugs mit einem Funktions- oder Aggregateträger verwendet. Hierbei werden wenigstens zwei plattenförmige Bauteile mittels eines Schnellverschlusses miteinander verbunden, so dass sich beispielsweise die Baugruppen von Kraftfahrzeugtüren zeitsparend montieren lassen.

Aus der WO 2008/101531 A1 sind zu diesem Zweck ein Verbindungselement zur mechanischen Verbindung wenigstens zweier Bauteile, insbesondere zweier Bauteile einer Kraftfahrzeugtür, sowie eine Verbindungsanordnung mit wenigstens einem ersten und einem zweiten Bauteil sowie mit einem solchen Verbindungselement bekannt. Das Verbindungselement weist einen Anlagebund zur Anlage an ein erstes Bauteil und einen Querriegel sowie einen diesen tragenden Schaftabschnitt zur verdrehbaren Durchführung durch korrespondierende Durchbrüche in den Bauteilen auf. Der Querriegel weist Anlageflanken zur Anlage an einem zweiten Bauteil und zur Verspannung dieses gegen das erste Bauteil in einer verdrehten Endmontageposition auf. In der Verbindungsanordnung durchgreift das Verbindungselement in einer Endmontageposition die axial fluchtenden Durchbrüche des ersten Bauteils und des zweiten Bauteils und ist gegenüber einer Einschub-Winkellage zur Verbindungsherstellung in eine End-Winkellage verdreht. Ist das Verbindungselement in einer Vormontageposition am ersten Bauteil gehalten, so befindet sich der Querriegel in der Durchgangsöffnung.

Die WO 2007/128375 A1 offenbart einen Drehverschluss, der zwei Bauteile miteinander verbindet. Der Drehverschluss weist eine Dichtlippe auf, die sich axial dichtend an eine flache Deckplatte andrückt.

Der Erfindung liegt die Aufgabe zugrunde, ein besonders geeignetes Verbindungselement zur mechanischen Verbindung wenigstens zweier Bauteile, insbesondere zweier Bauteile einer Kraftfahrzeugtür oder dergleichen, anzugeben. Insbesondere soll das Verbindungselement einfach herstellbar sein. Dabei soll eine geeignete Abdichtung zwischen dem Verbindungselement und einem ersten der Bauteile bereitgestellt werden. Des Weiteren soll eine geeignete Modul- oder Verbindungsanordnung mit einem solchen Verbindungselement und mindestens einem ersten Bauteil angegeben werden. Insbesondere soll eine weitgehend dichtende, einfach herzustellende und wieder lösbare Verbindung zwischen zwei Bauteilen, nämlich einem Träger (Funktions- oder Aggregateträger) und einem Karosserieteil oder Türinnenblech, angegeben werden.

Bezüglich des Verbindungselements wird die genannte Aufgabe mit den Merkmalen des Anspruchs 1 und hinsichtlich der Modul- oder Verbindungsanordnung mit den Merkmalen des Anspruchs 10 erfindungsgemäß gelöst. Vorteilhafte Ausgestaltungen und Weiterbildungen sind Gegenstand der Unteransprüche.

Das Verbindungselement ist zur mechanischen Verbindung wenigstens zweier Bauteile, insbesondere zweier Bauteile einer Kraftfahrzeugtür, vorzugsweise eines Trägers und eines weiteren Bauteils, vorgesehen und eingerichtet. Das Verbindungselemente weist einen nachfolgend auch als Anlagebund bezeichneten Verschlusskopf zur Anlage an ein erstes Bauteil, insbesondere am Träger, und einen nachfolgend auch als Querriegel bezeichneten Verschlussfuß zur Anlage an einem zweiten Bauteil und zur Verspannung dieses gegen das erste Bauteil in einer verdrehten Endmontageposition sowie einen Schaft oder Schaftabschnitt auf, der sich zwischen dem Verschlusskopf und dem hierzu in Schaftlängsrichtung axial beabstandeten Verschlussfuß erstreckt.

Der Verschlusskopf weist eine sich axial, d. h. in Schaftlängsrichtung des Schaftabschnitts erstreckende Mantel- oder Anlagefläche als Dichtfläche zur dichtenden Anlage an einer korrespondierenden Dichtfläche einer Ausnehmung des ersten Bauteils auf. Mit anderen Worten ist der Verschlusskopf zur dichtenden Anlage an einer Gegenfläche des ersten Bauteils bzw. des Trägers ausgebildet. Besonders vorteilhaft ist der Verschlusskopf (Anlagebund) des Verbindungselements, das vorteilhafterweise ein Verbindungsbauteil nach Art eines Bajonett- oder Schnellverschlusses ist, kegelstumpfförmig mit sich zum Verschlussfuß hin verjüngender Dichtfläche ausgebildet. Mit anderen Worten weist der Verschlusskopf eine Dichtfläche in Form eines Kegelmantelabschnitts auf. Der Verschlussfuß (Querriegel) ist geeigneter Weise schrauben- oder schraubenlinienförmig, weist also eine gewisse Steigung auf.

Zweckmäßigerweise ist dieses Verbindungselement mit dem Verschlusskopf (Anlagebund) und dessen Dichtfläche und mit dem Querriegel sowie mit dem Schaftabschnitt ein Einkomponenten-Kunststoff-Bauteil (1K-Bauteil).

In vorteilhafter Ausgestaltung weist der Verschlusskopf einen Ringraum mit radialen Innenstreben auf. Zudem ist der Schaftabschnitt als Hohlkörper mit geschlossenem Schaftfuß am dem Verschlusskopf gegenüberliegenden Schaftende ausgebildet. Durch jede dieser Maßnahmen lässt sich das Verbindungselement besonders material- und gewichtssparend herstellen.

Gemäß einer zweckmäßigen Weiterbildung ist der Verschlussfuß (Querriegel) des Verbindungselements zur verdrehbaren Durchführung durch korrespondierende Durchgangsöffnungen (Durchbrüche) in den Bauteilen vorgesehen und eingerichtet. Mit anderen Worten sind die Durchgangsöffnungen in den Bauteilen einerseits und der Verschlussfuß andererseits derart ausgestaltet, dass das Verbindungselement mit dessen Verschlussfuß durch die Durchgangsöffnungen hindurch gesteckt und anschließend verdreht werden kann, um die Bauteile gegeneinander zu verspannen und eine sichere Verbindung zwischen diesen herzustellen.

Hierzu weist der Verschlussfuß geeigneter Weise zwei diametral Riegelarme auf, die bezogen auf die Schaftlängsachse des Schaftabschnitts radial verlaufen. Unter Riegelarm(e) wird auch eine gewindeartige (gewindegangartige) oder profilierte Einkerbung des Schaftes oder Schaftabschnitts verstanden. Die Riegelarme weisen zueinander V-förmig oder keilförmig verlaufende Riegelflanken auf, wobei ein die Riegelflanken verbindender Riegelscheitel dem Verschlusskopf zugewandt ist. Mit diesen, vorzugsweise einander diametral gegenüberliegenden, Riegelarmen gelangt der Verschlussfuß am zweiten Bauteil und dort insbesondere an der rückseitigen Wandung oder Öffnungskante der entsprechenden Durchgangsöffnung zur Anlage.

In zweckmäßiger Weiterbildung verläuft eine der Riegelflanken mindestens eines der Riegelarme parallel zur Schaftlängsachse, während die andere Riegelflanke dieses Riegelarms in einem Winkel (Keilwinkel) schräg zur Schaftlängsachse verläuft. Dieser Winkel beträgt geeigneter Weise (50 ± 10)°, vorzugsweise 45°. Geeigneter Weise ist die parallel zur Schaftlängsachse verlaufende Riegelflanke des einen Riegelarms der schräg zur Schaftlängsachse verlaufenden Riegelflanke des anderen Riegelarms gegenüberliegend angeordnet.

Durch ein Verdrehen des Verbindungselementes werden die beiden Bauteile unter Herstellung der gewünschten Abdichtung des Verschlusskopfes (Anlagebundes) am ersten Bauteil in dessen den Verschlusskopf aufnehmenden Ausnehmung gegeneinander verspannt. Die Dichtflächen des Verschlusskopfes und des ersten Bauteils bilden hierbei ein Dichtflächenpaar.

In vorteilhafter Ausgestaltung ist mindestens ein, insbesondere rippen- oder stegartiges, Anschlagelement vorgesehen, das entlang des Verbindungselements, vorzugsweise am Verschlusskopf (Anlagebund), vorgesehen und geeigneter Weise an diesen angeformt ist. Zusätzlich oder alternativ ist geeigneter Weise mindestens eine Sicherungsnocke vorgesehen, die vorzugsweise am Verschlusskopf (Anlagebund) vorgesehen und/oder an diesen angeformt ist. Zudem weist der Anlagebund des Verbindungselements zweckmäßigerweise einen Werkzeugantrieb auf. Hierzu ist geeigneter Weise eine Werkzeugaufnahme, insbesondere einen Innenmehrkant oder Innenmehrrund, vorzugsweise einen Innensechskant bzw. Innensechsrund, am Anlagebund des Verbindungselements vorgesehen.

Das Anschlagelement steht dem Verschlusskopf vorzugsweise radial und beispielsweise auch axial über, und kann einerseits zur manuellen Handhabung des Verbindungselmentes im Zuge dessen Vormontage am ersten Bauteil dienen. Insbesondere dient das Anschlagelement zur Begrenzung der Drehbewegung des Verbindungselements in dessen Endmontageposition. In der Endmontageposition, wenn mittels des Verbindungselements die beiden Bauteile gegeneinander verspannt sind, gelangt das Anschlagelement an eine korrespondierende Anschlagkante des ersten Bauteils, vorzugsweise im Bereich dessen Aufnahme für den Verschlusskopf. Der Sicherungsnocken dient zur Sicherung des Verbindungselements in dessen Endmontageposition, um ein Rückdrehen des in diese Position ver- oder gedrehten Verbindungselements und somit ein Lösen, insbesondere vom ersten Bauteil, zu verhindern.

Die nachfolgend lediglich als Verbindungsanordnung bezeichnete Modul- oder Verbindungsanordnung umfasst wenigstens ein erstes Bauteil und ein zweites Bauteil sowie ein solches Verbindungselement, wobei die Bauteile jeweils eine Durchgangsöffnung (einen Durchbruch) aufweisen. In einer Vormontageposition befindet sich der Verschlussfuß (Querriegel) des Verbindungselements in der Durchgangsöffnung des ersten Bauteils, und der Verschlusskopf (Anlagebund) befindet sich in der korrespondierenden Ausnehmung des ersten Bauteils. Dabei ist vorteilhafterweise das Verbindungselement in der Vormontageposition mittels korrespondierender Füge- und Rastelemente am Verschlussfuß einerseits und an der Durchgangsöffnung andererseits am ersten Bauteil, vorzugsweise in dessen Durchgangsöffnung, lösbar verrastet. Mit anderen Worten erfolgt eine axiale Vorverrastung im Funktionsträger und somit im ersten Bauteil, so dass dieses bzw. der Funktionsträger gemeinsam mit dem Verbindungselement als Baugruppe an das Karosserieteil als zweites Bauteil montiert werden kann.

Das verschlussfussseitige Füge- bzw. Rastelement ist geeigneter Weise an der parallel zur Schaftlängsachse verlaufenden Riegelflanke des Verschlussfusses vorgesehen. Geeigneter Weise weist der Verschlusskopf eine Umfassungswand oder umlaufende Schürze mit radialer Elastizität auf. Zweckmäßigerweise weist der Kopf eine umfänglich liegende Raststruktur auf, so dass diese nach der Verrastung zwischen dem Kopf (Verschlusskopf) des Verbindungselements und dem Funktionsträger als erstem Bauteil liegt. Dadurch wird eine ungewollte Rückdrehung des Kopfes verhindert.

In einer Endmontageposition durchgreift das Verbindungselement mit dessen Verschlussfuß (Querriegel) des Verbindungselements in der Durchgangsöffnung des ersten Bauteils, und der die axial fluchtenden Durchgangsöffnungen (Durchbrüche) der beiden Bauteile und ist zur Verbindungsherstellung gegenüber einer Einschub-Winkellage (Vormontageposition) in eine End-Winkellage (Endmontageposition) verdreht.

In dieser End-Winkellage ist zwischen der vorzugsweise kegel- oder kegelstumpfförmigen Anlagefläche als Dichtfläche des Verschlusskopfes und einer alternativ oder vorzugsweise ebenfalls kegel- oder kegelstumpfförmigen Gegenfläche als korrespondierende Dichtfläche einer Innenwandung einer Ausnehmung des ersten Bauteils für den Verschlusskopf ein Dichtflächenpaar zwischen dem Verbindungselement und dem ersten Bauteil gebildet. Die Dichtflächen des Verschlusskopfes und des ersten Bauteils bilden hierbei ein Dichtflächenpaar, wobei die kegel- oder kegelstumpfförmige bzw. konische Anlagefläche als Dichtfläche am Verschlusskopf und/oder an der Innenwandung der Ausnehmung des ersten Bauteils oder (Funktions-)Trägers, insbesondere in Form eines konischen Napf oder eines solchen mit einer konisch verlaufenden Seitenwand, vorgesehen sein kann.

Dabei wird für eine zuverlässige Abdichtung des Verbindungselementes gegenüber dem ersten Bauteil eine ausreichende Flächenpressung zwischen der, insbesondere kegelstumpfförmigen, Anlagefläche als Dichtfläche des Verschlusskopfes (Anlagebunds) und der Gegenfläche des ersten Bauteils über den, vorzugsweise schraubenförmigen, Verschlussfuß des Verbindungselementes erzeugt. Die Gegenfläche des ersten Bauteils kann beispielsweise ebenfalls kegelstumpfförmig sein. Auch kann entweder die Gegenfläche des ersten Bauteils oder die Anlagefläche als Dichtfläche des Verschlusskopfes kegelstumpfförmig sein.

In einer Ausführung der Verbindungsanordnung umfasst diese wenigstens einen Funktionsträger und ein Karosserieteil sowie ein Verbindungselement, über welches das Karosserieteil mit dem, vorzugsweise aus Kunststoff bestehenden, Funktionsträger verbunden ist, wobei das Verbindungselement an seinem ersten Ende Haltestrukturen und das Karosserieteil einen Durchbruch aufweist, durch welchen das erste Ende des Verbindungselements in einer Einführstellung mit dessen Haltestrukturen in einer Verbindungsrichtung hindurchführbar ist, und wobei sich nach einer Drehung um einen Drehwinkel die Haltestrukturen in einer Schließstellung gegen das Karosserieteil verschränken.

Der Funktionsträger weist einen Durchbruch (Durchgangsöffnung, Ausnehmung) und einen, insbesondere hierzu konzentrischen, nachfolgend auch als Ausnehmung bezeichneten konischen Napf mit einer konisch verlaufenden Anlage- oder Seitenwandung und mit einer Bodenfläche auf, in welcher die Durchgangsöffnung in den Funktionsträger eingebracht ist, wobei das Verbindungselement einen Verschlusskopf mit einer nachfolgend auch als Schürze bezeichneten Umfassungswand aufweist, und wobei die Umfassungswand im Anschluss an eine Verdrehung des Verbindungselements in eine Schließstellung radial dichtend an einer Seiten- oder Innenwand der Ausnehmung anliegt und der Funktionsträger an das Karosserieteil axial geklemmt ist.

Die kopfseitige Schürze (Umfassungswand) weist insbesondere eine sich in Verbindungsrichtung, also in Bauteilrichtung, verjüngende Mantelfläche auf. Die Schürze kann sich von einer Verbindung mit dem Schaft nach unten erstrecken. Der Konus des (Verschluss-)Kopfes liegt in einer verjüngenden Ausgestaltung innerhalb des konischen Napfes des Funktionsträgers. Durch die sich verjüngende Schürze kann an der konisch verlaufenden Innenwand des Napfes eine möglichst große Dichtfläche bzw. eine entsprechend große Stützfläche für die Aufbringung der Axialkraft bereitgestellt werden.

Die Schürze kann sich von der Verbindungsstelle der Schürze mit dem Schaft entgegen der Verbindungsrichtung erstrecken. Diese Ausführung bedingt eine sich in Verbindungsrichtung verjüngende Schürze, wobei diese dann innerhalb des Napfes angeordnet ist und damit an der Innenwand des Napfes anliegt. Nachdem damit die Schürze an deren unterem Ende mit einer geschlossenen Fläche mit dem Schaft verbunden ist, können zum Beispiel die Antriebsstrukturen innerhalb der Schürze liegen, die gegenüber dem Napf als Stopfen wirkt.

Während des Verbindungsvorgangs bewegt sich der Kopf (Verschlusskopf) auch in Axialrichtung relativ zum zweiten Buteil (Karosserieteil) und damit auch relativ zum ersten Buteil (Funktionsträger), wodurch nach Verdrehung des Verbindungselements in eine Schließstellung die Schürze des Kopfs radial dichtend an der Konusfläche des Napfes anliegt.

Die Haltestrukturen sind Riegelarme oder als radiale Flügel ausgestaltet, die sich radial am Schaft erstrecken, der starr, insbesondere einstückig, mit dem Kopf (Verschlusskopf) des Verbindungselements verbunden ist. Der Durchbruch im Karosserieteil ist derart an die Form der radialen Flügel angepasst, dass diese in einer Projektion in einer bestimmten Ausrichtung durchgeführt werden können. Nachdem die Flügel durch die Ausnehmung im Karosserieteil geführt wurden, verschränken sich, insbesondere bei einem Drehwinkel von etwa 90°, die Flügel gegen das Karosserieteil. Die Flügel weisen dazu über die Drehrichtung ein in Axialrichtung ansteigendes Niveau auf, um mit zunehmender Verdrehung in Richtung der Schließstellung den Anpressdruck zu erhöhen. Mit der Verdrehung wird der (Verschluss-)Kopf des Verbindungselements in den Napf gezogen, so dass durch die konische Gestaltung des Napfes und des Kopfes diese derart aneinander liegen, dass sich umfänglich eine radiale Dichtung ergibt.

Eine Mindestklemmkraft wird bereitgestellt, indem die Gesamtstärke von Funktionsträger und Karosserieteil auf den Abstand zwischen Kopf und Haltestrukturen in der Schließstellung abgestimmt wird. Dabei wird die Eindringtiefe des Kopfes in den Napf berücksichtigt.

In einer Ausgestaltung der Verbindungsanordnung ist das Verbindungselement zweiteilig ausgebildet und weist eine mit einem Gewinde versehene Hülse auf, die sich in einem gewindetragenden Teil, das mit dem Verschlusskopf verbunden ist, durch Verdrehung des Verschlusskopf gegenüber der Hülse aufspreitzt. Die Hülse umfasst ein Spreizelement, so dass sich durch Verdrehung des Kopfes zur Hülse ein Aufspreizen der Hülse ergibt. Unter Aufspreizen der Hülse werden der Funktionsträger und das Karosserieteil, die zwischen dem Kopf (Verschlusskpf) und dem Spreizelement der Hülse liegen, aneinandergedrückt. Durch die Ausgestaltung des Verbindungselements mit einem Spreizelement kann die Hülse durch ein vorhandenes Loch in der Karosserie gesteckt und anschließend festgezogen werden. Der zur Befestigung notwendige Drehwinkel übersteigt dabei regelmäßig 360°. Es können sogar mehrere Umdrehungen zur Erreichung der Schließstellung notwendig sein.

Bevorzugt in dieser Ausgestaltung sind die Hülse und der Funktionsträger in deren Kontur derart aufeinander abgestimmt, dass sich eine Verdrehsicherung ergibt. Dadurch kann der Verbindungsbereich des Karosserieteils, das insbesondere ein Blechteil ist, in einer einfachen Geometrie gestaltet sein. Dabei stellt der Funktionsträger, der insbesondere ein Kunststoffteil ist, die Kontur zur Verdrehsicherung der Hülse bereit, so dass sich die Hülle bei Drehung des Kopfteils nicht mitdreht und ein Aufspreizen der Hülse erfolgen kann. Der Funktionsträger ist bevorzugt gegenüber dem Karosserieteil ebenfalls verdrehgesichert. Dies kann durch eine Konturanpassung oder durch einen einfachen Zapfen erfolgen.

Zweckmäßigerweise trägt die Hülse einen zentralen Bolzen, der ein Außengewinde trägt, wobei ein sich an den Verschlusskopf des Verbindungselements anschließender Schaft hohlzylindrisch ausgebildet ist und ein Innengewinde trägt. Zusätzlich oder alternativ ist der Bolzen von einer hohlzylindrischen Außenwandung umgeben. Der Bolzen ist fest mit der Außenwand der Hülse verbunden, so dass sich im eingebauten Zustand der Bolzen mit der Drehbewegung des Kopfes in Anzugsrichtung in Richtung des Kopfes bewegt.

Insbesondere wird der Bolzen solange in Axialrichtung mitgenommen, bis die Außenwand insbesondere an dem Kopf anliegt und bei weiterer Drehung in Anzugsrichtung der Boden der Hülse weiter zum Kopf gezogen wird. Dies führt zu einem Aufspreizen der Spreizelemente der Hülse. Das Spreizelement kann beispielsweise allein durch eine zylindrische Außenwand gebildet sein, die sich bei Kompression nach außen wölbt. Auf diese Weise können das Karosserieteil und der Funktionsträger zwischen den Kopf und dem Spreizelement geklemmt werden.

Bei einer Drehung entgegen der Anzugsrichtung wird das Spreizelement wieder zurückgestellt und die Verbindung kann wieder gelöst werden. Ist das Spreizelement durch eine hohlzylindrische Wandung gebildet, so wird diese bei der Drehung entgegen der Anzugsrichtung wieder in deren Ausgangslage gestreckt.

Gemäß einer weiteren bevorzugten Ausgestaltung kann der Funktionsträger eine zum Napf konzentrische Ausnehmung in Form eines Kreisquerschnitts aufweisen, der von dem Verbindungselement durchsetzt werden kann. Die Ausnehmung weist dabei einen geringfügig größeren Durchmesser als der Außendurchmesser des die Ausnehmung durchsetzenden Verbindungselements auf.

Gemäß einer weiteren Ausgestaltung kann der Kopf eine umfänglich liegende Raststruktur aufweisen, so dass diese nach der Verrastung zwischen dem Kopf mit dem Funktionsträger liegt. Dadurch wird eine ungewollte Rückdrehung des Kopfes verhindert.

In einer weiteren vorteilhaften Ausgestaltung können der Konus des Napfes und der Dichtbereich der Schürze den gleichen Winkel aufweisen. Dies sorgt für eine möglichst große Dichtfläche.

Gemäß einer besonders bevorzugten Weiterbildung der Erfindung weist die Verjüngung unterschiedliche Grade der Verjüngung über die Mantelfläche in Axialrichtung auf. Dadurch kann den Toleranzen des Napfes Rechnung getragen werden.

Die mit der Erfindung erzielten Vorteile bestehen insbesondere darin, dass das Verbindungselement einfach mittels eines einfachen Werkzeugs, vorzugsweise im Spritzverfahren (Kunststoffspritzverfahren), als 1K-Kunststoffteil herstellbar ist. Der Kopf (Verschlusskopf) des Verbindungelements weist bevorzugt Antriebsstrukturen auf, die eine formschlüssige Übertragung eines Drehmoments ermöglichen.

Zudem ist keine zusätzliche Dichtung, vorzugsweise auch kein 2K-Komponenten-Verbindungselement mit einer elastischen Dichtlippe oder dergleichen, zwischen dem ersten Bauteil (Träger) und dem Verbindungselement erforderlich. Dies wird vorzugsweise durch die Flächenpressung zwischen dem ersten Bauteil (Träger) und dem Verbindungselement erreicht.

Die Abdichtung erfolgt allein über das Dichtflächenpaar des Verbindungselementes und des ersten Bauteils, bevorzugt über die Kegelstumpfform des Verschlusskopfes und die entsprechende Gegenform, d. h. die kegelstumpfförmige Innenwandung der Aufnahme des ersten Bauteils (Trägers). Auch kann nur der Verschlusskopf des Verbindungselement oder nur die Innenwandung der Aufnahme bzw. des Napfes des ersten Bauteils (Trägers) die Konus- oder Kegelstumpfform ausweisen. Auch in diesen Ausführungen wird eine weitgehend dichtende, einfach herzustellende und wieder lösbare Verbindung zwischen dem ersten Bauteil, insbesondere einem Funktionsträger, und dem zweiten Bauteil, insbesondere einem Karosserieteil, geschaffen.

Durch geeigneter Weise elastische Eigenschaften des ersten Bauteils und/oder des Verbindungselements sowie durch die Ausführung der Kegelwinkel der Kegelstumpf- oder Konusform am Verschlusskopf des Verbindungselements bzw. der Innenwandung der bauteilseitigen Aufnahme (Napf) für den Verschlusskopf entsteht eine zuverlässige Abdichtung zwischen den Bauteilen, insbesondere zwischen dem ersten Bauteil (Träger) und dem Verbindungselement. Vorzugsweise können zusätzliche, vorgelagerte Wasserbarrieren und/oder Labyrinthe vorgesehen sein, welche einen Wassereintritt verhindern.

Bevorzugt ist die Dichtung zwischen dem Verbindungselement und dem bauteil- oder trägerseitigen Napf derart ausgestaltet, dass eine Dichtheit von mehr als 30 mm Wassersäule erreicht wird. Vorteilhafterweise können der Konus des bauteilseitigen Napfes und der Dichtbereich der verschlusskopfseitigen Schürze des Verbindungselementes den gleichen Winkel aufweisen. Hierduch ist eine möglichst große Dichtfläche erreicht.

Nachfolgend wird ein Ausführungsbeispiel der Erfindung anhand einer Zeichnung näher erläutert. Darin zeigen:
- Fig. 1: in einer perspektivischen Darstellung ein Verbindungselment mit einem Verschlusskopf (Anlagebund) und mit einem Verschlussfuß (Querriegel) sowie mit einem Schaftabschnitt, mit Blick auf die Rückseite des Verschlusskopfes,
- Fig. 2: in einer perspektivischen das Verbindungselement mit Blick auf die Oberseite des Verschlusskopfes,
- Fig. 3: in einer perspektivischen, teilweise geschnittenen Darstellung das Verbindungselement in einer Durchgangsöffnung eines ersten Bauteils (Trägers),
- Fig. 4: in einer perspektivischen Schnittdarstellung das Verbindungselement in der Durchgangsöffnung des ersten Bauteils (Trägers),
- Fig. 5: einen, insbesondere geringfügig gedrehten, Ausschnitt V aus Figur 4,
- Fig. 6: in einer Schnittdarstellung eine Verbindungsanordnung mit dem Verbindungselement in miteinander fluchtenden Durchgangsöffnungen von zweie zu verbindenden Bauteilen,
- Fig. 7: in perspektivischer Darstellung eine weitere Ausführungsform des Verbindungselments mit Blick auf die Oberseite des Verschlusskopfes,
- Fig. 8: in einer Explosionsdarstellung das Verbindungselement gemäß Fig. 7 in einer Position oberhalb einer Durchgangsöffnung im ersten Bauteil (Träger),
- Fig. 9: in perspektivischer, teilweise geschnittener Darstellung gemäß Fig. 3 das Verbindungselement gemäß Fig. 7 in einer verrasteten Vormontageposition im Durchgangsöffnung des ersten Bauteils,
- Fig. 10: in einer Schnittdarstellung die Verbindungsanordnung mit dem Verbindungselement gemäß Fig. 7 in den miteinander fluchtenden Durchgangsöffnungen der Bauteile im Endmontagezustand (Endmontageposition),
- Fig. 11: eine perspektivische Ansicht einer weiteren Ausführungsform eines Verbindungselements,
- Fig. 12: eine Schnittansicht der Verbindungs- oder Modulanordnung in vormontierter Stellung des Verbindungselements gemäß Fig. 11, und
- Fig. 13: in einer Schnittansicht die Verbindungs- oder Modulanordnung gemäß Fig. 12 in einer endmontierten Stellung des Verbindungselements.

Einander entsprechende Teile und Größen sind in allen Figuren mit den gleichen Bezugszeichen versehen.

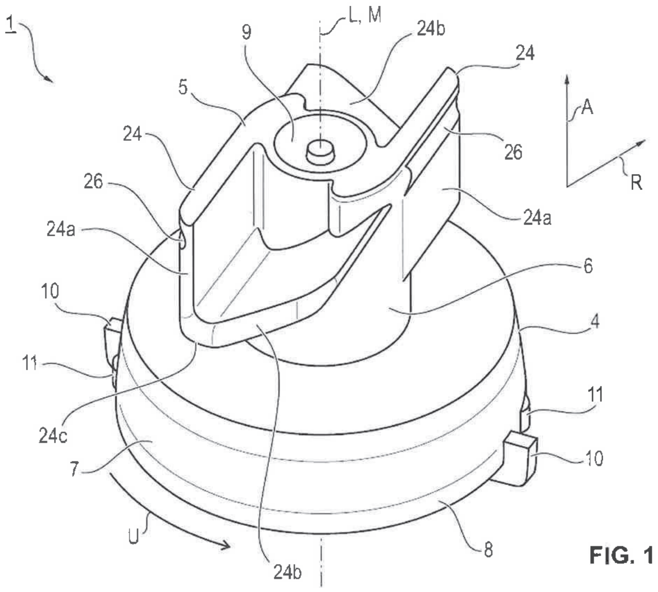

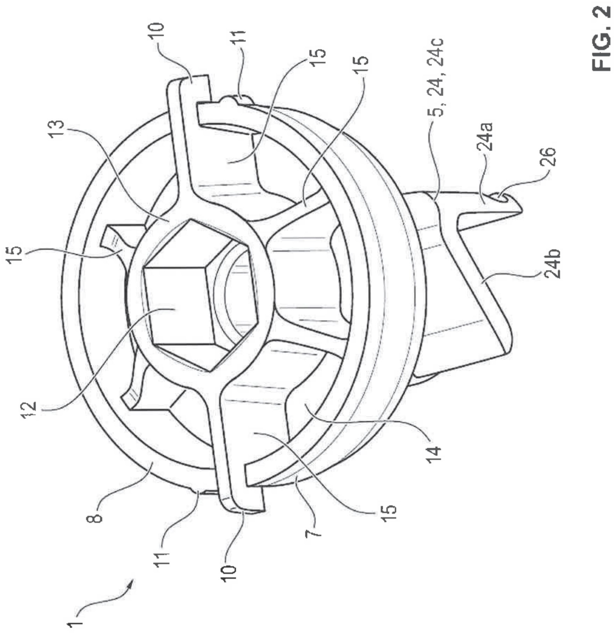

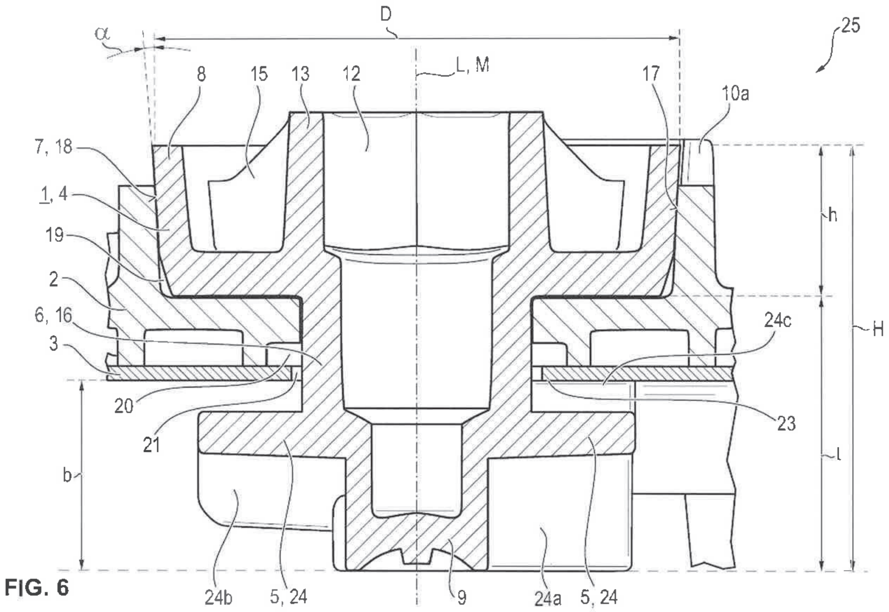

Das in den Figuren 1 und 2 gezeigte Verbindungselement 1 dient zur mechanischen Verbindung wenigstens zweier Bauteile 2, 3, insbesondere zweier Bauteile einer Kraftfahrzeugtür, vorzugsweise eines Funktionsträgers oder kurz Trägers 2 und eines weiteren Bauteils 3 (Fig. 6), vorzugsweise ein Karroserieteil. Das Verbindungselement 1 weist einen nachfolgend als Verschlusskopf oder einfach als Kopf 4 bezeichneten Anlagebund zur dichtenden Anlage an das erste Bauteil 2, einen nachfolgend als Verschlussfuß 5 bezeichneten Querriegel zum Verspannung der Bauteile 2, 3 in einer verdrehten Endmontageposition sowie einen Schaft oder Schaftabschnitt 6 zwischen dem Verschlusskopf 4 und dem Verschlussfuß 5 auf. Der Verschlusskopf 4 weist eine sich entlang des Schaftabschnitts 6 zum Verschlussfuß 5 hin verjüngende Mantel- oder Anlagefläche als (analgebundseitige) Dichtfläche 7 auf.

Mit anderen Worten ist der Verschlusskopf 4 kegelstumpfförmig und weist eine Umfassungswand oder umlaufende Schürze 8 auf, welche die sich entlang des Schaftabschnitts 6 zum Verschlussfuß 5 hin verjüngende Dichtfläche 7 bildet. Der Verschlusskopf 4 erstreckt sich axial in Richtung der Mittelachse M des Verbindungselementes 1 bzw. entlang der Schaftlängsachse L des Schaftabschnitts 6. Dieser ist als Hohlkörper mit freiend- oder bodenseitig geschlossenem Schaftfuß 9 am dem Verschlusskopf 4 abgewandten Schaftende ausgebildet. Die auf die Schaftlängsachse L und auf die Mittelachse M des Verbindungselementes 1 bezogene Axialrichtung ist in Fig. 1 mit A und die Radialrichtung ist dort mit R bezeichnet.

Das Verbindungselement 1 ist ein Verbindungsbauteil nach Art eines Bajonett- oder Schnellverschlusses. Der Verschlussfuß 5, geeigneter Weise in Schraubenform, ist zum Verschlusskopf 4 entlang des Schaftabschnitts 6 in Schaftlängsrichtung L axial beabstandet ist. Das Verbindungselement 1 mit dem Verschlusskopf 4 mit dessen Dichtfläche 7 und mit dem Verschlussfuß 5 sowie mit dem Schaftabschnitt 6 ist ein Einkomponenten-Kunststoff-Bauteil (1K-Bauteil).

Am Verschlusskopf 4 sind im Ausführungsbeispiel zwei stegartige Anschlagelemente 10 vorgesehen bzw. angeformt, welche den Verschlusskopf 4 radial überragen. Den Anschlagelementen 10 in Umfangsrichtung U vorgelagert ist jeweils eine radiale Sicherungsnocke 11, die am Außenumfang des Verschlusskopfes 4 zur Dichtfläche 7 axial versetzt angeformt ist und dem Verschlusskopf 4 radial übersteht. Zudem weist das Verbindungselement 1 am bzw. im Verschlusskopf 4 eine Werkzeugaufnahme 12 zur Aufnahme eines entsprechenden Werkzeugs auf. Im Ausführungsbeispiel ist die Werkzeugaufnahme 12 in Form eines Innensechskants zur Aufnahme eines Inbusschlüssels als Werkzeugt ausgeführt. Die Anschlagelemente 10 können auch an anderen Positionen des Verbindungselements 1 vorgesehen sein.

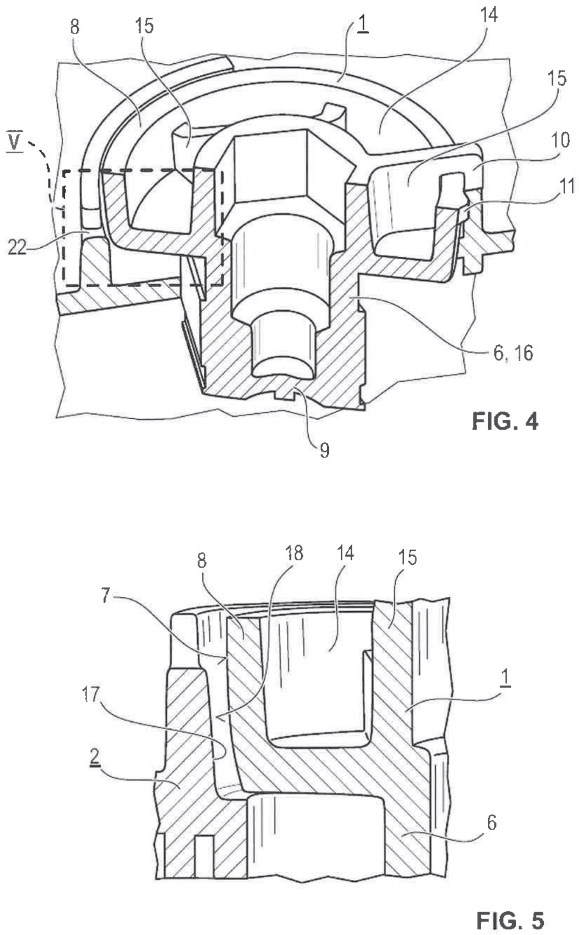

Wie auch in Fig. 4 erkennbar ist, ist zwischen einer Wandung 13 der Werkzeugaufnahme 12 und der Umfassungswand 9 des Verschlusskopfs 4 ein Ringraum 14 gebildet, in dem im Ausführungsbesipiel sechs Innenstreben 15 radial verlaufend eingeformt sind. Zwei diametral gegenüberliegende Innenstreben 15 tragen jeweils eines der Anschlagelemente 10, welche dem Verschlusskopf 4 sowohl radial als auch axial überstehen. Die lichte Weite des hohlen oder hohlzylindrischen Schaftabschnitts 6 des Verbindungselements 1 nimmt vom Verschlusskopf 4 zum Schaftfuß 16 hin stufenweise ab.

In Fig. 6 ist die axiale Höhe des Verschlusskopfs 4 mit h, die axiale Höhe oder Länge des Verbindungselements 1 mit H, der Durchmesser des Verschlusskopfes 4 (Anlagebundes) mit D, die axiale Höhe oder Länge des sich über den Verschlussfuß 5 erstreckenden Schaftes 16 des Verbindungselementes 1 mit I und die axiale Höhe oder Länge des Verschlussfußes (Querriegels) 5 mit b bezeichnet. Die axiale Höhe oder Länge des sich zwischen dem Verschlusskopf 4 und dem Verschlussfuß 5 erstreckenden Schaftabschnitts 6 entspricht der Differenz (I - b) zwischen der axiale Höhe I des Schaftes und der axialen Höhe b des Verschlussfußes 5.

Vorteilhafterweise entspricht die axiale Höhe h des Verschlusskopfs 4 zwischen 30% und 40% der axialen Höhe oder Länge H des Verbindungselements 1 und zwischen 50% und 60% der axialen Höhe oder Länge I des Schaftes 16. Die axiale Höhe b des Verschlussfußes 5 entspricht bevorzugt zwischen 40% und 50% der axialen Höhe oder Länge H des Verbindungselements 1 und zwischen 65% und 75% der axialen Höhe oder Länge I des Schaftes 16.

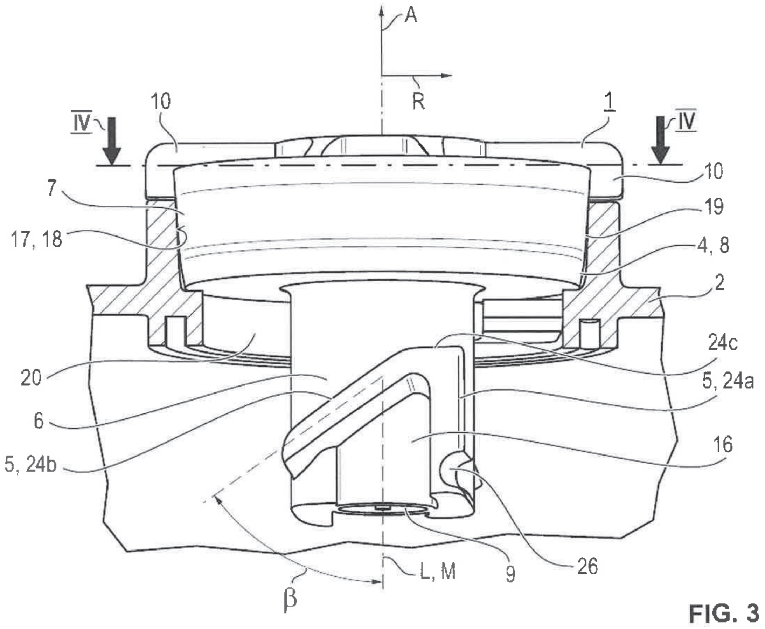

Wie aus den Figuren 3 und 6 vergleichsweise deutlich ersichtlich ist, weist der Verschlusskopf 4 die Form eines Kegelstumpfes auf. Mit anderen Worten weist der Verschlusskopf 4 eine sich zum Verschlussfuß 5 hin verjüngende Umfassungswand 8 mit der axialen Höhe h auf. Die Umfassungswand 9 bildet die entsprechende Dichtfläche 7 bzw. weist diese auf.

Der in Fig. 6 veranschaulichte Winkel (Kegelwinkel) α ist vorzugsweise größer als 1° und kleiner als 20°. insbesondere beträgt der Winkel α zwischen 2° und 15°, zweckmäßigerweise ist α = (8 ± 5)°.

Wie aus den Figuren 3 bis 6 ersichtlich ist, weist das erste Bauteil 2 als Gegenfläche zur kegelstumpfförmigen Umfassungswand 8 des Verschlusskopfes 4 des Verbindungselementes 1 eine kegelstumpfförmige Innen- oder Anlagewand 17 auf, welche eine ebenfalls kegelstumpfförmige (bauteilseitige) Dicht- oder Anlagefläche 18 bilden bzw. diese aufweisen kann. Die Innenwand 17 ist gebildet von und befindet sich in einer nachfolgend auch als Napf bezeichneten Ausnehmung 19 des ersten Bauteils 2, wobei die Ausnehmung 19 den Verschlusskopf 4 zumindest über einen Teil dessen axialer Höhe h aufnimmt. Grundsätzlich kann anstelle der kegelstumpfförmigen Umfassungswand 8 des Verschlusskopfes 4 des Verbindungselementes 1 auch lediglich die Innen- oder Anlagewand 17 kegelstumpfförmig ausgeführt sein.

Die Umfassungswand 8 des Verschlusskopfes 4 und die Innenwand (Anlagewand) 17 der Ausnehmung 19 des ersten Bauteils 2 bilden ein Dichtflächenpaar 7, 18. Mit anderen Worten bilden die Umfassungswand 8 und die Innenwand (Anlagewand des Trägers) 17 ein Dichtflächenpaar in Kegelstumpfform. In der Anlage des Verschlusskopfes 4 bzw. dessen Umfassungswand 8 an der innenumfangsseitigen Innenwand 17 der sickenartigen Ausnehmung 19 des ersten Bauteils (Trägers) 2 ist eine hohe Dichtheit (Abdichtung) des Verbindungselementes 1 und des ersten Bauteils 2 ohne zusätzliche, beispielsweise flexible und/oder elastische Dichtelemente (Dichtring, Dichtlippe oder dergleichen) gegeben. Wie in den Figuren veranschaulicht, sind die von der analgebundseitigen Umfassungswand 8 und von der bauteilseitigen Innenwand 17 gebildete Dichtflächen 7, 18 bzw. das Dichtflächenpaar umlaufend.

Der Verschlussfuß 5 und der diesen tragende Schaft 16 mit dem Schaftabschnitt 6 zwischen dem Verschlusskopf 4 und dem Verschlussfuß 5 sind zur verdrehbaren Durchführung des Verbindungselementes 1 durch korrespondierende Durchgangsöffnungen (Durchbrüche) 20, 21 in den Bauteilen 2, 3 vorgesehen und eingerichtet.

Die Figuren 3 und 4 zeigen das Verbindungselement 1 in einem Montage- oder Fügezustand, in welchem der Verschlussfuß 5 durch die Durchgangsöffnung 20 des ersten Bauteils 2 durchgesteckt ist und der Verschlusskopf 4 des Verbindungselementes 1 in der Ausnehmung 19 des ersten Bauteils 2 einsitzt. Der jeweilige Sicherungsnocken 11 schnappt oder greift in eine korrespondierende Sicherungsnut 22 entlang der Ausnehmung 19 des ersten Bauteils 2 ein.

Im in Fig. 6 gezeigten Montage- oder Fügezustand (Endmontagezustand) ist das nunmehr auch durch die korrespondierenden Durchgangsöffnung 21 des zweiten Bauteils 3 geführte Verbindungselement 1 weiter derart verdreht, dass der Verschlussfuß 5 das zweite Bauteil 3 im Bereich eines Öffnungsrandes 23 der Durchgangsöffnung 21 hintergreift. Aufgrund schraubenförmiger oder keilförmiger Konturen des Verschlussfußes 5 wird im Zuge dieser Drehbewegung des Verbindungselementes 1 eine axiale, d. h. in Richtung der Mittel- oder Schaftlängsachse M bzw. L wirkende Verspannkraft erzeugt. Dies führt zur Flächenpressung der verschlusskopfseitigen Umfassungswand 8 gegen die bauteilseitige Innenwand 17 des ersten Bauteils (Trägers) 3 und somit zur Flächenpressung des kegelstumpfförmigen Dichtflächenpaares 7, 18.

Im Endmontagezustand ist das Verbindungselement 1 mittels der Anschlagelemente 10 gegen ein weiteres Verdrehen und mittels der Sicherungsnocken 11 gegen eine ungewolltes Rückdrehen und Lösen am ersten Bauteil 2 gesichert. Für das jeweilige Anschlagelement 10 ist hierzu eine entsprechende Anschlagkontur 10a am ersten Bauteil 2 vorgesehen.

Der Verschlussfuß 5 weist zwei diametral gegenüberliegende, bezogen auf den Schaftabschnitt 6 bzw. auf dessen Schaftachse L radial verlaufende Flügel oder Riegelarme 24 als Haltestrukturen auf. Hierdurch werden die beiden Bauteile 2, 3 im Endmontagezustand zwischen dem Verschlusskopf 4 und dem Verschlussfuß 5 gegeneinander verspannt. Die Riegelarme 24 des Verschlussfußes 5 weisen zueinander V-förmig oder keilförmig verlaufende Riegelflanken 24a, 24b auf. Dabei ist ein die Riegelflanken 24a und 24b verbindender Riegelscheitel 24c dem Verschlusskopf 4 zugewandt.

Eine der Riegelflanken 24a, 24b, hier die mit 24a bezeichnete Riegelflanke, verläuft parallel zum Schaftabschnitt 6 bzw. zur Schaftlängsachse L, während die andere Riegelflanke 24b schräg oder geneigt in einem Keilwinkel β zum Schaftabschnitt 6 bzw. zur Schaftlängs- und Mittelachse **L,** M verläuft (Fig. 2). Der Keilwinkel β beträgt im Ausführungsbeispiel ca. 45°. Die V-förmige Ausgestaltung der Riegelarme 24 ist besonders vorteilhaft, um ein als Blechbauteil ausgeführtes Bauteil 3 gewindeartig konstant an einen als Kunststoffträger ausgeführtes Bauteil 2 heranzuführen (heranzuziehen).

Wie in Fig. 1 erkennbar ist, liegen die parallelen und die schrägen Riegelflanken 24a, 24b der beiden Riegelarme 24 jeweils einander gegenüber. Mit anderen Worten liegt die parallele Riegelflanke 24a des einen der Riegelarme 24 der schrägen Riegelflanke 24b des anderen Riegelarms 24 gegenüber. Hierdurch wirkt das Verrriegelungselement 1 in beiden Drehrichtungen symmetrisch.

Die in Fig. 6 veranschaulichte Verbindungsanordnung 25 umfassend das erste und zweite Bauteil 2, 3, die jeweils die Durchgangsöffnung 20 bzw. 21 aufweisen, sowie das Verbindungselement 1. Das Verbindungselment 1 durchgreift in der in Fig. 6 gezeigten Endmontageposition die axial fluchtenden Durchgangsöffnungen (Durchbrüche) 20, 21 des ersten Bauteils 2 und des zweiten Bauteils 3 und ist gegenüber der in Fig. 3 und 4 gezeigten Einschub-Winkellage zur Verbindungsherstellung in eine End-Winkellage (Endmontagezustands) verdreht.

Bei der in Fig. 6 gezeigten Verbindungsanordnung 25 in deren End-Winkellage (Endmontagezustand) ist zwischen dem Verschlusskopf 4 bzw. dessen kegelstumpfförmiger Dichtfläche 7 der Umfassungswand 8 und dem ersten Bauteil 2 bzw. dessen kegelstumpfförmiger Gegenfläche als komplementärere Dichtfläche 18 der Innenwand 17 der Ausnehmung 19 ein zuverlässig dichtendes Dichtflächenpaar und somit eine sichere Abdichtung des Verbindungselement 1 am ersten Bauteil (Träger) 2 hergestellt. Vorzugsweise weist die Umfassungswand 8 bzw. deren umlaufende Dichtfläche 7 des Verschlusskopfes 4 und/oder die Innenwand 17 bzw. deren umlaufende Dichtfläche 18 der Innenwand 17 in der Ausnehmung 19 des ersten Bauteils (Trägers) 2 keine Rauhigkeit auf.

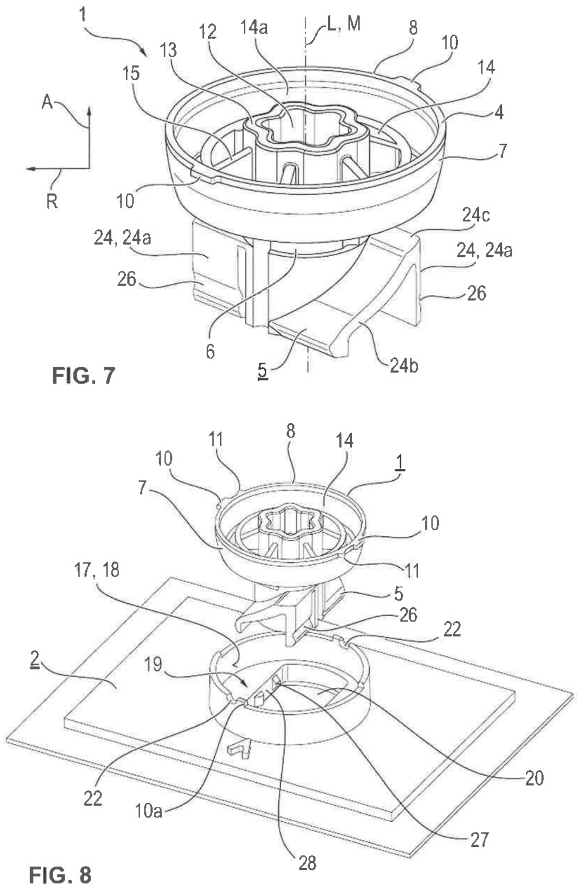

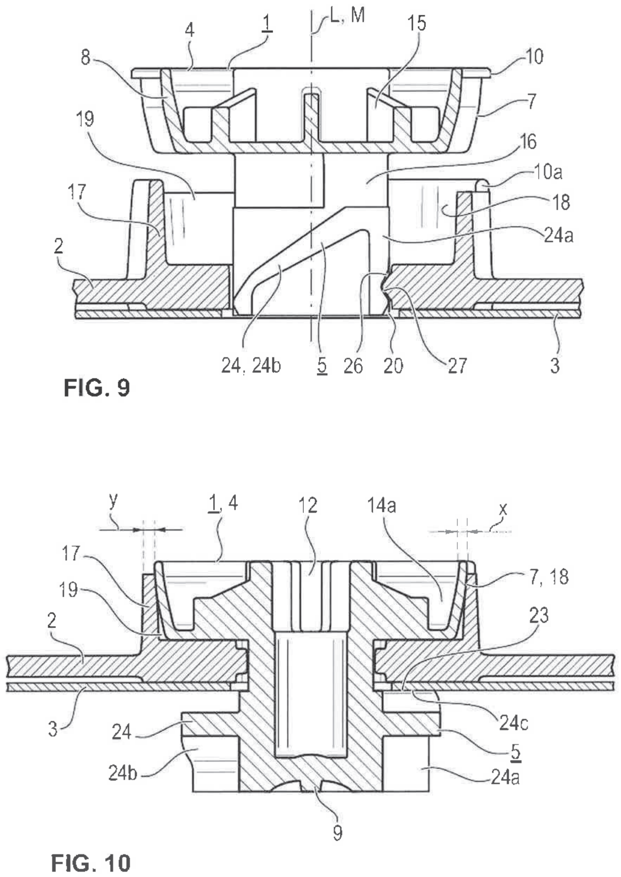

Das in Fig. 7 in gezeigte Verbindungselement 1 zur mechanischen Verbindung der Bauteile 2, 3 unterscheidet sich von demjenigen der Figuren 1 und 2 im Wesentlichen dadurch, dass der Verschlusskopf 4 als Anlagebund zur dichtenden Anlage am ersten Bauteil 2 eine vergleichsweise ausgeprägte Schalen- oder Topfform und zwei konzentrische Ringräume 14, 14a aufweist, in deren radial inneren Ringraum 14a wiederum die Innenstreben 15 eingeformt sind. Die Werkzeugaufnahme 12 ist hier als Innensechsrund ausgeführt. Der Verschlussfuß (Querriegel) 5 weist wiederum zwei diametral gegenüberliegende, bezogen auf den Schaftabschnitt 6 (Schaftachse L) radial verlaufenden Riegelarmen 24 mit jeweils parallel und schräg zur Schaftlängsachse L verlaufender Riegelflanke 24a bzw. 24b auf. Mit diesen werden die beiden Bauteile 2, 3 im Endmontagezustand zwischen dem Verschlusskopf 4 und dem Verschlussfuß 5 gegeneinander verspannt (Fig. 10).

Das Verbindungselement 1 mit dem Verschlusskopf 4 mit dessen Dichtfläche 7 und mit dem Verschlussfuß 5 sowie mit dem Schaftabschnitt 6 ist ein ebenfalls bevorzugt ein Einkomponenten-Kunststoff-Bauteil (1K-Bauteil). Auch bei dieser Ausführungsform weist der Verschlusskopf 4 eine sich entlang des Schaftabschnitts 6 zum Verschlussfuß 5 hin kegelstumpfartig verjüngende Mantel- oder Anlagefläche als Dichtfläche 7 auf.

Wie auch in Fig. 2 erkennbar ist, erstrecken sich die hier an der Umfassungswand 8 des Verschlusskopfes 4 angeformten Anschlagelemente 10 wiederum radial. Zudem sind die ebenfalls an die Umfassungswand 8 des Verschlusskopfes 4 angeformten, den Anschlagelementen 10 in Umfangsrichtung U vorgelagert und radial orientierten Sicherungsnocken 11 erkennbar, die im Endmontagezustand in die korrespondierenden Sicherungsnuten 22 der Ausnehmung 19 des ersten Bauteils 2 einrasten.

Bei dieser Ausführung weist das erste Bauteil 2 als Gegenfläche zur kegelstumpfförmigen Umfassungswand 8 des Verschlusskopfes 4 des Verbindungselementes 1 eine zylindrische Innen- oder Anlagewand 17 mit entsprechend zylindrischer Dicht- oder Anlagefläche 18 der den Verschlusskopf 4 über einen Teil dessen axialer Höhe h aufnehmenden Ausnehmung 19 des ersten Bauteils 2 auf. Die Umfassungswand 8 des Verschlusskopfes 4 und die Innenwand (Anlagewand) 17 der Ausnehmung 19 des ersten Bauteils 2 bilden wiederum ein Dichtflächenpaar 7, 18.

Wie aus den Fig. 9 ersichtlich ist, befindet sich das Verbindungselement 1 in einem ersten Montage- oder Fügezustand (Vormontagezustand) in der Durchgangsöffnung 20 des ersten Bauteils 2 und ist dort in Folge einer Drehung (Verdrehung) des Verbindungselements 1 verliersicher gehalten. Hierzu ist in den jeweiligen Riegelarm 24 und dort in dessen zur Schaftlängsachse L parallele Riegelflanke 24a ein Fügeelement 26 in Form einer Radialnut vorgesehen, in welche ein in der Durchgangsöffnung 20 des ersten Bauteils 2 vorgesehenes Rastelement 27 in Form eines Rastnocken eingreift. Dieser ist an zumindest einer von zwei geradlinigen Parallelwänden 28 der Durchgangsöffnung 20 angeformt.

Im in Fig. 10 gezeigten Montage- oder Fügezustand (Endmontagezustand) ist das durch die korrespondierende, mit der Durchgangsöffnung 20 des ersten Bauteils 2 axial fluchtende Durchgangsöffnung 21 des zweiten Bauteils 3 geführte Verbindungselement 1 weiter verdreht, bis der Verschlussfuß 5 das zweite Bauteil 3 im Bereich des Öffnungsrandes 23 der Durchgangsöffnung 21 kraftschlüssig hintergreift. Dabei ist der Riegelscheitel 24c eines der Riegelarme 24 des Verschlussfußes 5 gegen das zweite Bauteil 3 gepresst. Der Verschlusskopf 4 des Verbindungselementes 1 liegt in der Ausnehmung 19 des ersten Bauteils 2 ein, und der jeweilige Sicherungsnocken 11 der greift in die korrespondierende Sicherungsnut 22 ersten Bauteils 2 ein. Im Endmontagezustand ist das Verbindungselement 1 mittels der Anschlagelemente 10 gegen ein weiteres Verdrehen und mittels der Sicherungsnocken 11 gegen eine ungewolltes Rückdrehen und Lösen am ersten Bauteil 2 gesichert.

Im Zuge dieser Drehbewegung des Verbindungselementes 1 führt die axial wirkende Verspannkraft dazu, dass der Verschlusskopf 4 in die bauteilseitige Ausnehmung 19 eingepresst wird. Die dadurch bedingte Flächenpressung des Verschlusskopfes 4 in der Ausnehmung 19 des ersten Bauteils 2 führt zu einer entsprechenden (radialen) Verformung der verschlusskopfseitigen Umfassungswand 8 und/oder der bauteilseitigen, hier zylindrischen Innenwand 17 des ersten Bauteils (Trägers) 3. Hierzu ist die Wanddicke x, y der verschlusskopfseitigen Umfassungswand 8 bzw. der bauteilseitigen Innenwand 17 entsprechend dünnwandig bemessen.

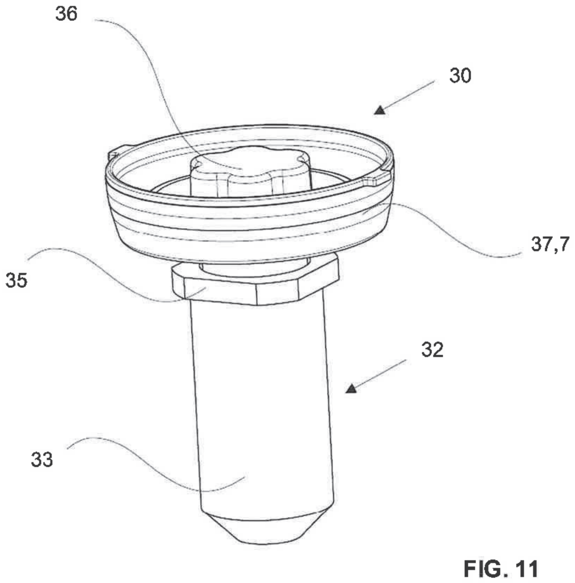

Die Figuren 11 bis 13 zeigen eine alternative Ausführungsform des Verbindungselements sowie dieses in der Verbindungs- oder Modulanordnung mit einem Trager (Funktionsträger) als erstes Bauteil 2 und einem Karosserieteil als zweites Bauteil 3 in vormontierten bzw. in einer endmontierten Stellung des Verbindungselements.

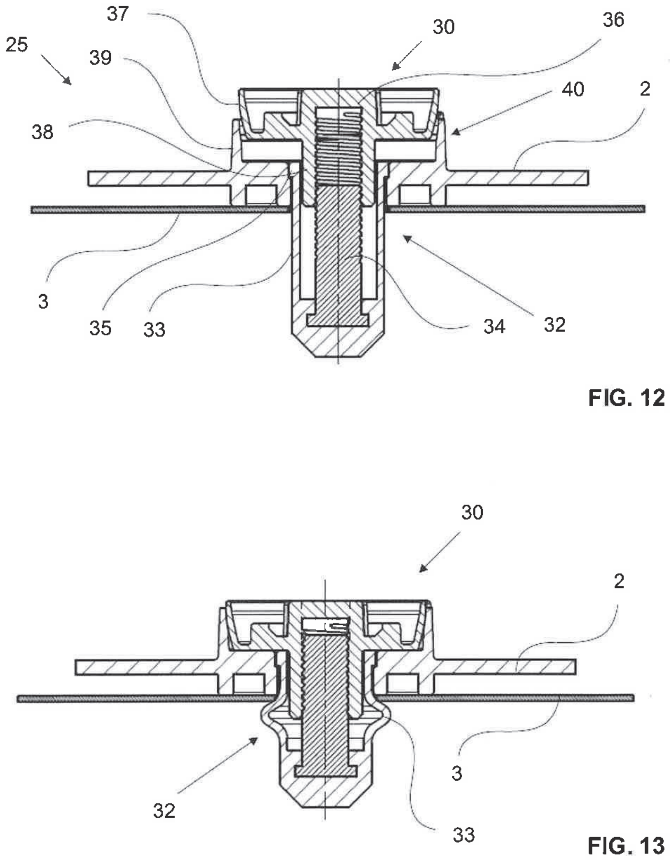

Das in Fig. 11 perspektivisch und in Fig. 12 in einer Schnittansicht dargestellte Verbindungselement 30 dieser Ausgestaltung ist zweiteilig und umfasst ein Teil mit einem Kopf (Verschlussopf) 31 und ein Spreizelement in Form einer Hülse 32. Die Hülse 32 weist eine im Wesentlichen hohlzylindrische Außenwandung 33 auf. Konzentrisch innerhalb der Außenwandung weist die Hülse 32 einen Bolzen 34 auf, der ein Außengewinde trägt. Am oberen Ende der Hülse 32 weist die Außenwandung 33 eine Formschlussstruktur 35 auf, die in eine korrespondierende Ausnehmung im Funktionsträger 2 umgesetzt wird, so dass eine Relativdrehung der Hülse 32 zum Funktionsträger 2 verhindert wird. Der Kopf 31 des Verbindungselements weist einen Außenantrieb 36 auf, der von der Umfassungswand oder Schürze 37 mit der Dichtfläche 7 umfasst ist und prinzipiell auch als Innenantrieb entsprechend der Werkzeugaufnahme 12 gemäß Fig. 2 ausgebildet sein kann.

Der den Verschlusskopf (Kopf) 31 aufweisende Teil des Verbindungselements 30 weist einen mit dem Kopf 31 fest verbundenen hohlzylindrischen Schaft 38 auf, der ein zu dem Außengewinde des Bolzens 34 korrespondierendes Innengewinde aufweist. Damit kann der Schaft 38 mit dem Bolzen 34 der Hülse 32 verschraubt werden. Bei Drehung des Kopfes 31 in Anzugsdrehrichtung werden der Kopf 31 und die Hülse 32 zueinander bewegt.

Wie in Fig. 13 veranschaulicht ist, wird bei fortschreitender Drehung die Außenwandung 33 der Hülse 32 komprimiert und beult radial aus, so dass eine Spreizwirkung eintritt. Die Außenwandung 33 verspannt sich gegen das Karosserieteil als zweites Bauteil 3, wobei sich die Schürze 37 des Kopfes 31 an die Wand 39 des Napfes 40 des Funktionsträgers als erstes Bauteil 2 anlegt. Damit wird eine verbesserte Dichtwirkung zwischen dem Funktionsträger 2 und dem Verbindungselement 30 erreicht. Wird der Kopf 31 nunmehr entgegen der Anzugsrichtung gedreht, wird die Außenwandung 33 der Hülse 32 gestreckt, und die Verbindung kann gelöst werden.

Zusammenfassend betrifft die Erfindung ein Verbindungselement 1, vorzugsweise aus einer Materialkomponente, zur mechanischen Verbindung wenigstens zweier Bauteile 2, 3, aufweisend einen Verschlusskopf 4 und einen Verschlussfuß 5 zur Verspannung des zweiten Bauteil 3 gegen das erste Bauteil 2 in einer Endmontageposition sowie einen Schaftabschnitt 6, wobei der Verschlusskopf 4 eine sich axial (in Schaftlängsrichtung L) erstreckende Dichtfläche 7 zur dichtenden Anlage an einer Dichtfläche 18 einer Ausnehmung 19 des ersten Bauteils 2 aufweist. Eine erfindungsgemäße Modul- oder Verbindungsanordnung umfasst ein erstes Bauteil 2 und wenigstens ein zweites Bauteil 3 sowie ein solches Verbindungselement 1 bzw. 30.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

Zudem kann die beschriebene Lösung nicht nur in dem speziell dargestellten Anwendungsfall zum Einsatz kommen, sondern auch in ähnlicher Ausführung bei anderen Kraftfahrzeug-Anwendungen, wie zum Beispiel bei Tür- und Heckklappensystemen, bei Fensterhebern, bei Fahrzeugschlössern, bei verstellbaren Sitz- und Innenraumsystemen sowie bei elektrischen Antrieben, Steuerungen, Sensoren und deren Anordnung im Fahrzeug.

### Bezugszeichenliste

- 1: Verbindungselement
- 2: erstes Bauteil/Funktionsträger
- 3: zweites Bauteil/Karosserieteil
- 4: VerschlusskopfAnlagebund
- 5: Verschlussfuß/Querriegel
- 6: Schaft/-abschnitt
- 7: (analgebundseitige) Dicht-/Anlagefläche
- 8: Umfassungswand/Schürze
- 9: Schaftfuß
- 10: Anschlagelement
- 10a: Anschlagkontur
- 11: Sicherungsnocke
- 12: Werkzeugaufnahme
- 13: Wandung
- 14,14a: Ringraum
- 15: Innenstrebe
- 16: Schaft
- 17: Innen-/Anlagewand
- 18: (bauteilseitige) Dicht-/Anlagefläche
- 19: Ausnehmung/Napf
- 20,21: Durchgangsöffnung/Durchbruch
- 22: Sicherungsnut
- 23: Öffnungsrand
- 24: Riegelarm/Flügel
- 24a: parallele Riegelflanke
- 24b: schräge Riegelflanke
- 24c: Riegelscheitel
- 25: Verbindungsanordnung
- 26: Fügeelement/Radialnut
- 27: Rastelement/-nocke
- 28: Parallelwand
- 30: Verbindungselement
- 31: Verschlusskopf
- 32: Hülse
- 33: Außenwand/-wandung
- 34: Bolzen
- 35: Formschlussstruktur
- 36: Außenantrieb
- 37: Umfassungswand/Schürze
- 38: Schaft
- 39: Wand
- 40: Napf

- A: Axialrichtung
- D: Durchmesser des Anlagebundes
- H: axiale Höhe des Verbindungselements
- L: Schaftlängsachse
- M: Mittelachse
- R: Radialrichtung
- U: Umfangsrichtung
- b: axiale Höhe des Querriegels
- h: axiale Höhe des Anlagebunds
- I: axiale Höhe des Schafts
- x,y: Wanddicke

- α: Kegel-/Winkel
- β: Keil-/Winkel

## Patentansprüche

1. Verbindungselement (1) zur mechanischen Verbindung wenigstens zweier Bauteile (2, 3), aufweisend
- einen Verschlusskopf (4) zur Anlage an ein erstes Bauteil (2),
- einen Verschlussfuß (5) zur Anlage an einem zweiten Bauteil (3) und zur Verspannung dieses gegen das erste Bauteil (2) in einer verdrehten Endmontageposition, und
- einen Schaftabschnitt (6), der sich zwischen dem Verschlusskopf (4) und dem hierzu in Schaftlängsrichtung (L) axial beabstandeten Verschlussfuß (5) erstreckt,
- wobei der Verschlusskopf (4) kegelstumpfförmig mit sich zum Verschlussfuß (5) hin verjüngender und sich in Schaftlängsrichtung (L) des Schaftabschnitts (6) erstreckender Dichtfläche (7) zur dichtenden Anlage an einer korrespondierenden Dichtfläche (18) einer Ausnehmung (19) des ersten Bauteils (2) aufweist.

2. Verbindungselement (1) nach Anspruch 1,
**dadurch gekennzeichnet,**
**dass** der Verschlusskopf (4) mit dessen Dichtfläche (7) und der Verschlussfuß (5) sowie der Schaftabschnitt (6) ein Einkomponenten-Kunststoff-Bauteil ist.

3. Verbindungselement (1) nach Anspruch 1 oder 2,
**dadurch gekennzeichnet,**
**dass** der Verschlusskopf (4) einen Ringraum (14) mit radialen Innenstreben (15) aufweist.

4. Verbindungselement () nach einem der Ansprüche 1 bis 3,
**dadurch gekennzeichnet,**
**dass** der Schaftabschnitt (6) als Hohlkörper, insbesondere mit freiend- oder bodenseitig geschlossenem Schaftfuß (9), ausgebildet ist,

5. Verbindungselement () nach einem der Ansprüche 1 bis 4,
**dadurch gekennzeichnet,**
**dass** der Verschlussfuß (5) ein Fügeelement (26) zur lösbaren Verrastung mit einem korrespondierenden Rastelement (27) des ersten Bauteils (2) aufweist.

6. Verbindungselement () nach einem der Ansprüche 1 bis 5,
**dadurch gekennzeichnet,**
**dass** der Verschlussfuß (5) bezogen auf die Schaftlängsachse (L) des Schaftabschnitts (6) radial verlaufende Riegelarme (24) mit zueinander V-förmig oder keilförmig verlaufenden Riegelflanken (24a, 24b) aufweist, wobei ein die Riegelflanken (24a, 24b) verbindender Riegelscheitel (24c) dem Verschlusskopf (4) zugewandt ist.

7. Verbindungselement (1) nach Anspruch 6,
**dadurch gekennzeichnet,**
**dass** eine der Riegelflanken (24a, 24b) mindestens eines der Riegelarme (24) parallel zur Schaftlängsachse (L) und die andere Riegelflanke (24a, 24b) dieses Riegelarms (24) in einem Winkel (β) schräg zur Schaftlängsachse (L) verläuft.

8. Verbindungselement (1) nach Anspruch 7,
**dadurch gekennzeichnet,**
**dass** die parallel zur Schaftlängsachse (L) verlaufende Riegelflanke (24a, 24b) des einen Riegelarms (24) der schräg zur Schaftlängsachse (L) verlaufenden Riegelflanke (24a, 24b) des anderen Riegelarms (24) gegenüberliegend angeordnet ist.

9. Verbindungselement (1) nach einem der Ansprüche 1 bis 8,
**gekennzeichnet durch**
mindestens ein Anschlagelement (10) und/oder mindestens einen Sicherungsnocken (11), insbesondere am Verschlusskopf (4).

10. Verbindungsanordnung (25) umfassend wenigstens ein erstes Bauteil (2) und ein zweites Bauteil (3), die jeweils eine Durchgangsöffnung (20, 21) aufweisen, sowie ein Verbindungselement (1), aufweisend,
- einen Verschlusskopf (4) zur Anlage an das erste Bauteil (2),
- einen Verschlussfuß (5) zur Anlage am zweiten Bauteil (3) und zur Verspannung dieses gegen das erste Bauteil (2) in einer verdrehten Endmontageposition, und
- einen Schaftabschnitt (6), der sich zwischen dem Verschlusskopf (4) und dem hierzu in Schaftlängsrichtung (L) axial beabstandeten Verschlussfuß (5) erstreckt,
- wobei der Verschlusskopf (4) eine sich in Schaftlängsrichtung (L) des Schaftabschnitts (6) erstreckende Dichtfläche (7) zur dichtenden Anlage an einer korrespondierenden Dichtfläche (18) einer Ausnehmung (19) des ersten Bauteils (2) aufweist.
- wobei das Verbindungselement (1) in einer Vormontageposition am ersten Bauteil (2) gehalten ist und sich der Verschlussfuß (5) in der Durchgangsöffnung (20) befindet,
- wobei das Verbindungselement (1) in einer Endmontageposition die axial fluchtenden Durchgangsöffnungen (20, 21) des ersten Bauteils (2) und des zweiten Bauteils (3) durchgreift und gegenüber einer Einschub-Winkellage zur Verbindungsherstellung in eine End-Winkellage verdreht ist, und
- wobei zwischen der Dichtfläche (7) des Verschlusskopfs (4) und der Dichtfläche (18) der Ausnehmung (19) für den Verschlusskopf (4) im ersten Bauteil (2) ein Dichtflächenpaar zwischen dem Verbindungselement (1) und dem ersten Bauteil (2) gebildet ist.

11. Verbindungsanordnung (25) nach Anspruch 10, wobei die Dichtfläche (7) des Verschlusskopfs (4) und/oder die Dichtfläche (18) der Ausnehmung (19) kegelförmig oder konisch ist.

12. Verbindungsanordnung (25) nach Anspruch 10 oder 11,
- wobei das Verbindungselement (1) in der Vormontageposition mittels korrespondierender Füge- und Rastelemente (26, 27) am Verschlussfuß (5) und an der Durchgangsöffnung (20) am ersten Bauteil (2) lösbar verrastet ist, und/oder
- wobei der Verschlusskopf (4) eine Umfassungswand (8) aufweist und derart ausgebildet ist, dass die Umfassungswand (8) eine radiale Elastizität aufweist.

13. Verbindungsanordnung (25) umfassend wenigstens einen Funktionsträger (2) und ein Karosserieteil (3) sowie ein Verbindungselement (30),
- wobei das Karosserieteil (3) mit dem Funktionsträger (2) über das Verbindungselement (30) verbunden ist,
- wobei das Verbindungselement (30) an seinem ersten Ende Haltestrukturen (32) aufweist,
- wobei das Karosserieteil (3) einen Durchbruch aufweist, durch welchen das erste Ende des Verbindungselements (30) in einer Einführstellung mit dessen Haltestrukturen (32) in einer Verbindungsrichtung hindurchführbar ist,
- wobei nach Drehung um einen Drehwinkel die Haltestrukturen (32) sich in einer Schließstellung gegen das Karosserieteil (3) verschränken,
- wobei der Funktionsträger (2) eine Durchgangsöffnung mit einer konisch verlaufenden Anlagewandung (39) und mit einer Bodenfläche aufweist, in welcher die Durchgangsöffnung des Funktionsträgers (2) eingebracht ist,
- wobei das Verbindungselement (30) einen Verschlusskopf (31) mit einer Umfassungswand (37) aufweist, und
- wobei die Umfassungswand (37) im Anschluss an eine Verdrehung des Verbindungselements (30) in eine Schließstellung radial dichtend an einer Seiten- oder Innenwand (39) der Durchgangsöffnung anliegt und der Funktionsträger (2) an das Karosserieteil (3) axial geklemmt ist.

14. Verbindungsanordnung (25) nach Anspruch 14, wobei das Verbindungselement (30) zweiteilig ausgebildet ist und eine mit einem Gewinde versehene Hülse (32) umfasst, die sich in einem gewindetragenden Teil, das mit dem Verschlusskopf (31) verbundenen ist, durch Verdrehung des Verschlusskopf (31) gegenüber der Hülse (32) aufspreitzt.

15. Verbindungsanordnung (25) nach Anspruch 14 oder 15, wobei die Hülse (32) einen zentralen Bolzen (34) aufweist, der ein Außengewinde trägt,
- wobei ein sich an den Verschlusskopf (31) des Verbindungselements (30) anschließende Schaft (38) hohlzylindrisch ausgebildet ist und ein Innengewinde trägt, und/oder
- wobei der Bolzen (34) von einer hohlzylindrischen Außenwandung (33) umgeben ist.
